(19) Europäisches Patentamt
European Patent Office
Office européen des brevets

(11) **EP 2 883 078 B1**

(12) **EUROPÄISCHE PATENTSCHRIFT**

(45) Veröffentlichungstag und Bekanntmachung des Hinweises auf die Patenterteilung:
**23.03.2016   Patentblatt 2016/12**

(21) Anmeldenummer: **13750506.1**

(22) Anmeldetag: **06.08.2013**

(51) Int Cl.:
*G01S 13/56* *(2006.01)*     *G01F 1/74* *(2006.01)*
*G01F 1/66* *(2006.01)*     *F25J 3/06* *(2006.01)*
*F25J 1/02* *(2006.01)*     *F25J 3/04* *(2006.01)*
*F25J 3/02* *(2006.01)*

(86) Internationale Anmeldenummer:
**PCT/EP2013/002350**

(87) Internationale Veröffentlichungsnummer:
**WO 2014/023420 (13.02.2014 Gazette 2014/07)**

(54) **VERFAHREN UND VORRICHTUNG ZUR ERKENNUNG VON SICH BEWEGENDEN OBJEKTEN IN EINEM GASSTROM BEI EINER KRYOGENEN GASTRENNUNG**

METHOD AND DEVICE FOR DETECTING MOVING OBJECTS IN A GAS STREAM DURING CRYOGENIC GAS SEPARATION

PROCÉDÉ ET DISPOSITIF DE DÉTECTION D'OBJETS EN MOUVEMENT DANS UN COURANT GAZEUX LORS D'UNE SÉPARATION CRYOGÉNIQUE DE GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2012   EP 12005785**

(43) Veröffentlichungstag der Anmeldung:
**17.06.2015   Patentblatt 2015/25**

(73) Patentinhaber: **Linde Aktiengesellschaft**
**80331 München (DE)**

(72) Erfinder:
• **FERSTL, Johann**
**80995 München (DE)**
• **SCHLICHTING, Joachim**
**81371 München (DE)**

(74) Vertreter: **Imhof, Dietmar et al**
**Linde AG**
**Legal Services Intellectual Property**
**Dr.-Carl-von-Linde-Straße 6-14**
**82049 Pullach (DE)**

(56) Entgegenhaltungen:
GB-A- 2 026 276          GB-A- 2 322 987
US-A1- 2008 295 609

**Beschreibung**

Die Erfindung betrifft ein Verfahren zur Erkennung von bewegten Objekten in einem Gasstrom bei einer kryogenen Gastrennung.

In Direktkontaktapparaten wie z.B. Kolonnen oder Packungssäulen, aber auch bei Siedevorgängen stehen gasförmige und flüssige Phasen in direktem Kontakt. Dabei kann es zum Tropfenmitriss, also einem Mitführen von kleinen Tröpfchen oder Nebel durch den Gasstrom kommen. Dieses Austragen der flüssigen Phase ist in der Regel unerwünscht. Zur Verhinderung des Tropfenmitrisses kommen Tropfenabscheider, wie z.B. prallblechbasierte Abscheider wie Lamellenabscheider, Gestrickabscheider, Schwerkraftabscheider oder Zyklonabscheider, zum Einsatz. Arbeitet der Tropfenabscheider nicht ordnungsgemäß, kommt es zu einem Tropfenmitriss. Dies kann zu schwerwiegenden Schäden an dahinter folgenden Anlagenteilen führen, die auf eine Gasströmung ohne Flüssigkeitsanteil angewiesen sind.

Eine regelmäßige Überwachung des Abscheiders, also eine Detektion von Tropfenmitriss, kann üblicherweise bei Gestrickabscheidern zum Einsatz kommen. Dabei macht man sich die Eigenschaft des Drahtgestricks zunutze, dass sich vor einem starken Anstieg eines Wassermitrisses aus dem Gestrick heraus zuerst eine Wassersprudelschicht im unteren Bereich des Gestricks ausbildet. Diese Wassersprudelschicht erhöht den Druckverlust der Luft beim Durchströmen des Gestricks proportional zur Höhe der Sprudelschicht.

Die indirekte Überwachung von Wassermitriss über den Druckverlust weist den Nachteil auf, dass Schaum, der im Falle eines Gestrickabscheiders nicht zurückgehalten werden kann, keinen nennenswerten Druckverlustanstieg zur Folge hat. Bei einer Entstehung von Schaum ist die Kontrolle daher unzureichend. Darüber hinaus können sich im Laufe der Zeit Verschmutzungen, wie beispielsweise beim Einsatz von Wasser Algen oder Kalk, im Gestrick ablagern. Der Druckverlust über das Gestrick steigt dabei langsam und kontinuierlich an. Die Mitrissmenge erhöht sich mit zunehmender Verschmutzung des Gestricks, so dass sich ein Alärmgrenzwert für den Druckverlust stets nur vorübergehend angeben lässt.

Bei anderen Typen von Abscheidern können aus anderen Prozessparametern, wie z.B. der Temperatur hinter dem Abscheider oder dem Verhalten des Mediums in weiteren Verfahrensschritten, Rückschlüsse auf einen eventuellen Tropfenmitriss gezogen werden. Diese Methoden sind aber sehr fehleranfällig, da auch eine Vielzahl anderer Gründe zu den genannten Abweichungen der Prozessparameter führen kann.

Zur direkten Erkennung von Tropfenmitriss in einem Gasstrom sind bislang nur aufwendige optische Messverfahren und -vorrichtungen mit rechnergestützter Mustererkennung kommerziell erhältlich.

Die US2008/0295609 A1 beschreibt eine Möglichkeit, um ein Fließverhalten eines Mehrphasengemischs (insbesondere Flüssigkeitstropfen, die in einem Gas mitgerissen werden) zu bestimmen, welches durch eine Leitung fließt. Zu diesem Zweck wird ein Mikrowellensignal durch die Leitung ausgesendet und zwei Dopplerverschobene Signale werden empfangen. Aus diesen empfangenen Signalen wird das Fließverhalten bestimmt, beispielsweise als Geschwindigkeit der Gasphase oder der Flüssigkeitsphase.

Gemäß der GB 2 322 987 A werden Objekte detektiert, die sich in eine Gasturbine hinein oder aus einer Gasturbine hinausbewegen. Zu diesem Zweck wird ein elektromagnetisches Signal ausgesendet und ein reflektiertes elektromagnetisches Signal wird detektiert und ausgewertet. Durch eine Dopplerverschiebung des reflektierten Signals werden die Objekte detektiert.

Die GB 2 026 276 A beschreibt eine Möglichkeit, um agglomerierten Staub im Abgas in einem Fabrikschornstein mit einem Doppler-Radar zu detektieren.

Der vorliegenden Erfindung liegt die Aufgabe zugrunde, ein Verfahren und eine Vorrichtung bereitzustellen, mit denen sich bewegende Objekte, insbesondere Flüssigkeitströpfchen, in einem Gasstrom zuverlässig und einfach erkannt werden können.

Diese Aufgabe wird gelöst durch die Verfahren und die Vorrichtungen mit den Merkmalen der unabhängigen Patentansprüche.

Die erfindungsgemäßen Verfahren eignen sich zur Erkennung von sich bewegenden Objekten in einem Gasstrom. Als solche werden hier und im Folgenden sich bewegende Objekte bezeichnet, die ganz oder teilweise von einem Gasstrom umgeben sind, unabhängig davon, ob sich die Objekte mit dem Gasstrom oder relativ zu ihm bewegen. Als sich bewegende Objekte in einem Gasstrom sind im Folgenden insbesondere Flüssigkeitstropfen bzw. Nebel in dem Gasstrom zu verstehen. Sich bewegende Objekte in dem Gasstrom beschreiben demgemäß insbesondere einen Tropfenmitriss in dem Gasstrom. Mit der Formulierung "sich bewegende Objekte" bzw. "bewegte Objekte" soll im Folgenden sowohl der Fall eines einzelnen Objekts als auch der mehrerer Objekte umfasst sein.

Die Erkennung dieser sich bewegenden Objekte in dem Gasstrom und somit ein Erkennen eines Tropfenmitrisses umfasst im Rahmen der Erfindung ein Bestrahlen des Gasstroms mit elektromagnetischer Sendestrahlung im Mikrowellen- oder Terahertzbereich und ein Erfassen daraus resultierender Streustrahlung. Diese entsteht durch Streuung bzw. Reflexion der Sendestrahlung an mindestens einem Objekt im oder beim Gasstrom. Das erfindungsgemäße Verfahren umfasst weiterhin ein Erfassen eines Frequenzunterschiedes zwischen der Sendestrahlung und der Streustrahlung. Aus diesem Frequenzunterschied wird auf das Vorhandensein eines sich bewegenden Objektes oder mehrerer sich bewegender Objekte im Gasstrom geschlossen. Dabei werden aus dem Frequenzunterschied und der Amplitude, insbesondere der Amplitude der Streustrahlung bzw. der reflektierten Sendestrahlung, ein Vorhandensein, eine Anzahl und/oder ein Anteil an sich bewegender Objekte im Gasstrom bestimmt.

Diese Erkennung von sich bewegenden Objekten in dem Gasstrom wird im Rahmen der Erfindung für die Trennung von Gasen, insbesondere für eine kryogene Gastrennung, genutzt.

Gemäß dem ersten erfindungsgemäßen Verfahren wird die Erkennung von sich bewegenden Objekten in dem Gasstrom im Zuge eines Verfahrens zur Trennung von Gasen eines Gasgemischs genutzt. Das Gasgemisch wird dabei in Form eines Gasstroms beispielsweise durch eine entsprechende Anlage zur Gastrennung transportiert. Aus den Rückschlüssen auf ein sich bewegendes Objekt im Gasstrom können somit ein Vorhandensein, eine Anzahl und/oder ein Anteil an sich bewegender Objekte im Gasstrom bestimmt werden. Die Trennung der Gase des Gasgemischs wird unter Berücksichtigung dieser derart bestimmten sich bewegenden Objekte im Gasstrom durchgeführt.

Unter den Begriffen "Gastrennung" bzw. "kryogene Gastrennung" bzw. "Trennung von Gasen" ist dabei insbesondere ein kompletter Prozess zur Trennung von Gasen zu verstehen, wobei insbesondere sämtliche Schritte dieses Prozesses umfasst sein sollen. Insbesondere beginnt der Prozess zur Trennung von Gasen dabei mit einem ersten Schritt, in welchem zu trennendes Gasgemisch angesaugt wird, und endet mit einem letzten Schritt, in welchem die einzelnen getrennten Gase des Gasgemischs entnommen werden. Insbesondere umfasst der Prozess zur Trennung von Gasen ein (Vor-)Reinigen bzw. Waschen des Gasgemischs, um Staub und andere Feststoffteilchen herauszufiltern Des Weiteren umfassen die einzelnen Schritte des Prozesses zur Trennung von Gasen insbesondere mehrfaches Erwärmen und Abkühlen des Gasgemischs bzw. mehrfaches Verdichten und Entspannen des Gasgemischs.

Im Fall einer Luftzerlegung kann der Prozess zur Trennung von Gasen insbesondere eine Tieftemperaturzerlegung der Luft sein. Insbesondere umfassen die Schritte des Prozesses zur Trennung von Gasen bei der Luftzerlegung insbesondere zunächst eine Vorreinigung der Luft, insbesondere durch ein Molsieb, um insbesondere Wasserdampf, Staub, Kohlenwasserstoffe, Lachgas und Kohlenstoffdioxid aus der Luft herauszufiltern. Die Weiteren Schritte umfassen insbesondere Vorkühlen auf eine bestimmte Temperatur, Verdichten und Entspannen der Luft, Abkühlen auf den Taupunkt, eine Entnahme der einzelnen getrennten Gase der Luft und gegebenenfalls ein Erwärmen der getrennten Gase.

Gemäß dem zweiten erfindungsgemäßen Verfahren wird mittels der Erkennung von sich bewegenden Objekten in dem Gasstrom eine Überwachung und/oder eine Regelung von Elementen bzw. Bauteilen durchgeführt, welche insbesondere im Rahmen der kryogenen Gastrennung genutzt werden. Derartige Elemente können als ein Tropfenabscheider, ein Direktkontaktkühler, ein Verdampfer ein Massenkraftabscheider, ein Zyklonabscheider, ein Elektrofilter oder ein Gaswäscher ausgebildet sein.

Falls mittels des erfindungsgemäßen Verfahrens nicht nur Flüssigkeitstropfen bzw. Nebel als sich bewegende Objekte in dem Gasstrom erkannt werden, sondern beispielsweise auch feste Partikel (z.B. Aschepartikel, Staub, Eis), können derartige Elemente bzw. Bauteile insbesondere auch als ein Feststofffilter oder ein Rußfilter ausgebildet sein.

Derartige Elemente werden im Rahmen einer kryogenen Gastrennung insbesondere für Abscheidungsprozesse genutzt, um einen Tropfenmitriss zu verhindern. Dennoch kann es an diesen Elementen zu einem Tropfenmitriss kommen. Beispielsweise kann bei einem Verdampfer eine nicht vollständige Verdampfung dazu führen, dass Tropfen mitgerissen werden.

Durch die Erkennung von sich bewegenden Objekten in dem Gasstrom werden derartige Elemente überwacht. Insbesondere kann das Erkennen von sich bewegenden Objekten dabei stromabwärts des entsprechenden Elements durchgeführt werden, um zu überwachen, ob dieses Element korrekt funktioniert und einen Tropfenmitriss verhindert.

Alterativ oder zusätzlich kann das entsprechende Element auch geregelt werden. Dabei kann das Erkennen von sich bewegenden Objekten insbesondere vor dem Element durchgeführt werden. Werden sich bewegende Objekte in dem Gasstrom erkannt, kann das Element darüber informiert werden und entsprechend angesteuert werden, um die Objekte beispielsweise herauszufiltern und einen weiteren Tropfenmitriss zu verhindern.

In den beiden erfindungsgemäßen Verfahren wird somit ein Tropfenmitriss im Rahmen einer kryogenen Gastrennung erkannt. Somit wird verhindert, dass ein Tropfenmitriss bei der kryogenenen Gastrennung Schäden anrichten kann. Dabei soll im Folgenden unter der Formulierung "kryogene Gastrennung" sowohl eine kryogene Gastrennung gemäß dem ersten erfindungsgemäßen Verfahren als auch gemäß dem zweiten erfindungsgemäßen Verfahren umfasst sein.

Analog zu den zwei erfindungsgemäßen Verfahren umfasst die Erfindung des Weiteren zwei Vorrichtungen. Eine erste erfindungsgemäße Vorrichtung dient, analog zu dem ersten erfindungsgemäßen Verfahren, zur Trennung von Gasen eines Gasgemischs in dem Gasstrom.

Eine "Vorrichtung zur Trennung von Gasen" bzw. eine "Vorrichtung zur Gastrennung" bzw. eine "Vorrichtung zur kryogenen Gastrennung" ist insbesondere als eine Anlage ausgebildet. Diese Anlage weist insbesondere eine oder mehrere Coldboxen auf. In derartigen Coldboxen können beispielsweise Komponenten bzw. Anlagenteile wie Kolonnen, Plattenwärmeaustauscher, Druckbehälter, Abscheider, eine zugehörige Verrohrung, Instrumentierungen für Temperatur- und Druckmessungen, Druckdifferenz- und Füllstandsanzeigen sowie Gehäusedurchführungen und Armaturen integriert sein.

Im Fall einer Luftzerlegung ist die Anlage zur Trennung von Gasen insbesondere als eine Luftzerlegungsanlag ausgebildet. Derartige Luftzerlegungsanlagen weisen insbesondere Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Ferner können Vorrichtungen zur Gewinnung weiterer Luftkomponenten, insbesondere der Edelgase Krypton, Xenon und/oder Argon, vorgesehen sein.

Die erste erfindungsgemäße Vorrichtung weist dabei Elemente auf, die dazu eingerichtet sind, die Erkennung von sich bewegenden Objekten in einem Gasstrom durchzuführen. Insbesondere umfasst die erste erfindungsgemäße Vorrichtung ein Rohr oder einen Behälter, durch das bzw. den ein Gasstrom geleitet werden kann. Sie umfasst weiterhin mindestens einen Sender, der geeignet ist, den Gasstrom mit elektromagnetischer Sendestrahlung im Mikrowellen- oder Terahertzbereich zu bestrahlen. Die Vorrichtung weist darüber hinaus mindestens einen Empfänger auf. Dieser ist eingerichtet, Streustrahlung (insbesondere Reflexionsstrahlung) zu detektieren, die entsteht, wenn die Sendestrahlung an mindestens einem Objekt gestreut (oder sogar reflektiert) wird. Schließlich umfasst die erfindungsgemäße Vorrichtung Mittel, die geeignet sind, einen Frequenzunterschied zwischen der Sende- und der detektierten Streustrahlung (Reflexionsstrahlung) zu erfassen.

Die Mittel umfassen dabei ferner Datenverarbeitungsmittel zur Auswertung eines oder mehrerer Parameter der Streustrahlung, zum Rückschließen auf sich bewegende Objekte im Gasstrom aus dem Frequenzunterschied. Analog zu dem ersten erfindungsgemäßen Verfahren wird mittels dieses Rückschlusses insbesondere ein Vorhandensein, eine Anzahl und/oder ein Anteil an bewegten Objekten in dem Gasstrom bestimmt.

Die erste erfindungsgemäße Vorrichtung ist dazu eingerichtet, die Trennung der Gase des Gasgemischs unter Berücksichtigung der Rückschlüsse der Mittel zum Erfassen des Frequenzunterschiedes durchzuführen.

Die Trennung der Gase des Gasgemischs unter Berücksichtigung der bestimmten sich bewegenden Objekte im Gasstrom kann dabei insbesondere Maßnahmen zum Schutz von Bauteilen bzw. Elementen umfassen, welche empfindlich gegen Tropfenmitriss sind und von diesem beschädigt werden können. Alternativ oder zusätzlich können dabei auch Maßnahmen umfasst sein, durch welche die Trennung der Gase des Gasgemischs in Abhängigkeit von dem Anteil an sich bewegender Objekte im Gasstrom effizienter durchgeführt wird. Beispielsweise können dabei Parameter einzelner Bauteile bzw. Elemente speziell auf den Anteil an sich bewegender Objekte im Gasstrom eingestellt und angepasst werden.

Hiermit wird insbesondere die Regelung bzw. Überwachung durchgeführt. Die Regelung bzw. Überwachung kann dabei ebenfalls durch die Mittel oder durch ein weiteres Element, beispielsweise ein Steuergerät, durchgeführt werden. Eine zweite erfindungsgemäße Vorrichtung dient, analog zu dem zweiten erfindungsgemäßen Verfahren, zur Überwachung und/oder Regelung eines Tropfenabscheiders, eines Direktkontaktkühlers, eines Verdampfers, eines Massenkraftabscheiders, eines Zyklonabscheiders, eines Elektrofilters und/oder eines Gaswäschers. Dabei umfasst die zweite erfindungsgemäße Vorrichtung ein Rohr oder einen Behälter, durch das bzw. den ein Gasstrom geleitet werden kann. Analog zu der ersten erfindungsgemäßen Vorrichtung umfasst auch die zweite erfindungsgemäße Vorrichtung mindestens einen Sender, mindestens einen Empfänger und Mittel zum Erfassen eines Frequenzunterschiedes und zum Rückschließen auf sich bewegende Objekte im Gasstrom.

Im Rahmen der Erfindung können somit einzelne Bauteile bzw. Elemente der kryogenen Gastrennung vor Tropfenmitriss geschützt werden. Die Erkennung von sich bewegenden Objekten in dem Gasstrom kann dabei einmalig oder mehrmals während der kryogenen Gastrennung durchgeführt werden. Insbesondere wird die Erkennung von sich bewegenden Objekten in dem Gasstrom durchgeführt, bevor der Gasstrom Bauteile bzw. Elemente durchläuft, welche empfindlich gegen Tropfenmitriss sind und von diesem beschädigt werden können. Somit wird im Zuge der Erfindung der Tropfenmitriss frühzeitig erkannt und es können entsprechende Maßnahmen eingeleitet werden, um die jeweiligen Bauteile bzw. Elemente zu schützen.

Die folgenden Ausführungsformen der Erfindung sowie die dargestellten Vorteile gelten in analoger Weise sowohl für die beiden erfindungsgemäßen Verfahren als auch für die beiden erfindungsgemäßen Vorrichtungen.

Ein Verdampfer kann dabei beispielsweise als ein Badverdampfer, als ein "Block in Kettle" Wärmetauscher, als ein gewickelter Wärmetauscher, ein Rohrbündel Wärmetauscher oder als ein Plattenwärmetauscher ausgebildet sein. Im Sinne der Erfindung kann dabei ein Erkennen eines Entrainment des Verdampfers realisiert werden. Entrainment beschreibt im Allgemeinen eine Aufnahme von Partikeln in einem Fluid. Im Sinne der Erfindung beschreibt Entrainment insbesondere eine Aufnahme von Objekten in den Gasstrom. Beispielsweise kann der Verdampfer insbesondere für eine Erdgasverflüssigung oder eine Propan-Kältestufe genutzt werden. Analog kann auch das erste erfindungsgemäße Verfahren für eine Erdgasverflüssigung oder eine Propan-Kältestufe genutzt werden.

Die vorliegende Erfindung macht sich für die Erkennung sich bewegender Objekte in dem Gasstrom und somit für die Erkennung eines Tropfenmitriss den Dopplereffekt zunutze, indem aus einer ggf. erfassten Frequenzverschiebung eines rückgestreuten bzw. reflektierten Signals gegenüber dem ursprünglichen Sendesignal auf eine Relativgeschwindigkeit bzw. Relativgeschwindigkeitsverteilung des streuenden/reflektierenden Objektes geschlossen werden kann. Bei einer vergleichsweise großen Anzahl an streuenden/reflektierenden Objekten und somit einer vergleichsweise großen Anzahl an Streuzentren wird dabei insbesondere nur auf eine Relativgeschwindigkeitsverteilung geschlossen.

Das streuende bzw. reflektierende mindestens eine Objekt kann zum Beispiel eine feste Wandung des Rohres oder Behälters sein (in diesem Fall wird keine Frequenzverschiebung erfasst) oder ein sich mit dem Gasstrom bewegendes Teilchen oder Objekt, beispielsweise ein Flüssigkeitströpfchen oder ein festes Partikel (wie insbesondere z. B. ein Aschepartikel).

Das Messprinzip der erfindungsgemäßen Verfahren und der erfindungsgemäßen Vorrichtungen hat den Vorteil, dass es auch bei Abscheidern eingesetzt werden kann, bei denen keine Detektion sich bewegender Objekte durch einen Druckverlust möglich ist. Das Rohr bzw. der Behälter muss für die Detektion lediglich von einer Seite zugänglich sein. Da das Prinzip auf einer direkten Vorgehensweise beruht, wird zudem eine hohe Zuverlässigkeit bei der Erkennung sich im Gasstrom bewegender Objekte erreicht. Bei Verwendung im Zusammenhang mit einem Direktkontaktkühler erlaubt die Erfindung, die Messung weiter entfernt von einem Abscheider, beispielsweise direkt vor einem wasserempfindlichen Bauteil durchzuführen. Im Gegensatz zu kommerziell erhältlichen Regensensoren können bei dem der Erfindung zugrunde liegenden Volumenverfahren Randeffekte wie eine Kondensation von Flüssigkeit an der Rohr- oder Behälterwandung diskriminiert und/oder unberücksichtigt gelassen werden. Da auf bewegliche mechanische Teile verzichtet werden kann, weist die erfindungsgemäße Vorrichtung eine hohe Lebensdauer auf.

Das erfindungsgemäße Verfahren und die erfindungsgemäße Vorrichtung sind zudem weitgehend unempfindlich gegen Ablagerungen an den Rohr- oder Behälterwandungen. Insbesondere sind Kalkablagerungen oder feuchte Algenschichten ausreichend durchlässig für die elektromagnetische Sendestrahlung, so dass sie die Funktionsfähigkeit nicht beeinträchtigen.

Vorteilhafte Ausgestaltungen der vorliegenden Erfindung sind Gegenstand der Unteransprüche, dieser Beschreibung und der Figur.

In einer vorteilhaften Ausführungsform des erfindungsgemäßen Verfahrens umfasst der Schritt des Erfassens eines Frequenzunterschiedes ein Diskriminieren von solcher gestreuter (z.B. reflektierter) Strahlung, die von mindestens einem unbewegten Objekt gestreut (bzw. reflektiert) wurde, beispielsweise von Tropfen an einer Wandung des Rohrs oder Behälters oder von der Wandung selbst. Das Diskriminieren kann beispielsweise mit Hilfe eines geeigneten Filters erfolgen. Alternativ oder zusätzlich kann im Rahmen einer Auswertung der Frequenzen gestreuter Strahlung (beispielsweise mit Hilfe geeigneter Analysesoftware) diejenige gestreute Strahlung erkannt werden, die vom mindestens einen unbewegten Objekt gestreut wurde.

Über eine geeignete Datenaufbereitung kann die Streustrahlung oder auch direkt ein resultierendes Dopplersignal analysiert werden. Die gemessene Relativgeschwindigkeit, eine durch die einzelnen bewegten Objekte aufgeprägte zeitliche Modulation der Streustrahlung und/oder eine absolute Signalstärke kann dabei in die Datenaufbereitung und -analyse einbezogen werden. Dadurch kann die Detektionssicherheit gesteigert werden.

In einer bevorzugten Ausführungsform werden die stoffabhängigen Größen Permeabilität $\mu$ und Permittivität $\varepsilon$ der zu beobachtenden bewegten Objekte und des Gases in die Datenanalyse einbezogen. Sie beeinflussen die Streuung bzw. Reflexion der Sendestrahlung. Im Falle von Wasser und Luft betragen die relativen Permittivitäten (Dielektrizitätszahlen) ca. $\varepsilon$ =77 bzw. $\varepsilon$ =1.

In einer bevorzugten Ausführungsform wird/werden ein oder mehrere Parameter der Streustrahlung ausgewertet; die Vorrichtung kann dafür geeignete Datenverarbeitungsmittel umfassen. Beispielsweise kann das Rückschließen auf sich bewegende Objekte im Gasstrom ein Vergleichen mindestens eines Parameters der erfassten Streustrahlung mit einem oder mehreren vorbestimmten Schwellwert(en) umfassen. Der oder die Parameter können beispielsweise eine oder mehrere Frequenz(en) oder Amplitude(n) der Streustrahlung sein. Der oder die Schwellwert(e) kann bzw. können ein oder mehrere Intervall(e) begrenzen, die Toleranzbereiche für den oder die Parameter in Bezug auf die Indikation sich bewegender Objekte im Gasstrom sind.

Diese Ausführungsform erlaubt eine flexible Anwendung des Verfahrens. Beispielsweise kann das Rückschließen ein Erfassen einer vorgesehenen minimalen Amplitude der Streustrahlung umfassen. Liegt die Amplitude unterhalb dieses Minimums, kann von einem Messfehler oder einer vernachlässigbar kleinen Anzahl an sich bewegenden Objekten ausgegangen werden. Welche Anzahl dabei im jeweiligen Fall als unbeachtlich anzusehen ist, kann über eine Festlegung des Schwellwertes variabel eingestellt werden.

Aus dem oder den Parameter(n) der Streustrahlung können Informationen über die sich bewegenden Objekte hergeleitet werden. Beispielsweise kann aus einer Frequenz der Streustrahlung auf eine Relativgeschwindigkeit der sich bewegenden Objekte in Richtung der Sendestrahlung geschlossen werden. Alternativ oder zusätzlich kann aus einer Signalstärke (d.h. der Amplitude) der Streustrahlung eine Ober- oder Unterschranke für die Objektanzahl pro Volumeneinheit im Gasstrom und/oder eine mittlere Objektgröße abgeleitet werden. Insbesondere kann aus einer Amplitude der Streustrahlung ein integraler Streuquerschnitt errechnet werden, also eine Kenngröße, die einer mittleren Größe und/oder einer Anzahl an sich bewegenden Objekten pro Volumeneinheit im Gasstrom entspricht. So lässt sich Aufschluss über die Vorgänge im Rohr oder Behälter gewinnen.

Das Herleiten der Menge bzw. Anzahl bzw. des Anteils an Objekten bzw. der (mittleren) Größe der Objekte in dem Gasstrom ist dabei zunächst einmal nur über die Intensität des Doppler-Signals bzw. der Streustrahlung möglich.

Da die Größe der Objekte (insbesondere im Submillimeter-Bereich) teilweise deutlich unter der Wellenlänge der Sendestrahlung liegen kann (falls beispielsweise Radarstrahlung als Sendestrahlung verwendet wird, liegt die Wellenlänge der Sendestrahlung im cm-Bereich), müsste die Rückstreuung der Sendestrahlung als Mie-Strahlung bzw. als Rayleigh-Streuung beschrieben werden. Dabei wird üblicherweise ein Wirkungsquerschnitt angesetzt. Da im Rahmen der Erfindung die Wellenlänge und ein Rückstreuwinkel bzw. ein Beobachtungswinkel, unter welcher die rückgestreute Strahlung emittiert wird, konstant sind, bietet sich eine Beschreibung analog zu einer direkten Streuung an einzelnen Partikeln an.

Dabei gilt für den Beitrag eines einzelnen Objekts bzw. Tropfen zur Intensität des Doppler-Signals bzw. der Streustrahlung:

$$I \propto \frac{A}{d^2} \propto \frac{r^2}{d^2}$$ mit der Intensität I, dem Abstand d der Objekte zueinander und der Querschnittsfläche A bzw. dem Radius r der Objekte. Folglich gilt, dass bei gleichem Abstand d wenige große Objekte bzw. Tropfen für einen höheren Wassertransport als viele kleine Objekte bzw. Tropfen sorgen.

Es kann angenommen werden, dass die Objekte in dem Gasstrom in einem zweckmäßigen Volumen gleichverteilt oder zumindest zeitlich konstant verteilt sind. Der Abstand hat somit keinen Einfluss, wodurch nur noch eine Abhängigkeit von der Größe der Objekte gegeben ist.

Um nun die Menge an Objekten quantitativ zu bestimmen, muss demgemäß auch eine Größenverteilung der Objekte bekannt sein oder zumindest konstant sein. Dies kann für Tropfen in Form eines Tropfenmitrisses in dem Gasstrom angenommen werden. Somit kann das erfindungsgemäße System aus Sensoren experimentell kalibriert werden.

Eine vorteilhafte Ausführungsform der vorliegenden Erfindung umfasst eine Datenfusion der Informationen, die aus der erfassten Streustrahlung erzielt werden, mit Daten, die auf Grundlage anderer Messprinzipien, beispielsweise optischer oder schallbasierter Techniken gewonnen wurden. So kann eine entsprechende Analyse noch umfassendere und zuverlässigere Ergebnisse über die sich bewegenden Objekte im Gasstrom liefern.

Vorzugsweise erfolgt das Bestrahlen des Gasstroms mit Sendestrahlung schräg zur Flussrichtung des Gasstroms und/oder unter verschiedenen Einstrahlwinkeln (gleichzeitig oder im Wechsel) und/oder mit verschiedenen Frequenzen (gleichzeitig oder im Wechsel). Insbesondere können auf diese Weise Redundanzen erzeugt und so die Zuverlässigkeit erhöht werden. Alternativ oder zusätzlich kann die Bestrahlung gleichzeitig auf verschiedene Strömungslinien des Gases im Rohr oder Behälter ausgerichtet werden, indem beispielsweise mehrere Sender um das Rohr bzw. den Behälter herum verteilt werden oder an verschiedenen Positionen entlang dem Rohr bzw. Behälter angeordnet sind. Auf diese Weise können Informationen über die Verteilung der sich bewegenden Objekte im Rohr oder Behälter gewonnen werden.

Der mindestens eine Sender und der mindestens eine Empfänger können in einen gemeinsamen Sensor integriert sein oder separat voneinander angeordnet sein. Im ersteren Fall umfasst der Sensor vorzugsweise einen Mischer, der die Sende- und die Streustrahlung miteinander überlagert und daraus ein integriertes Signal (d.h. das Dopplersignal) bildet und ausgibt; derartige Sensoren sind kostengünstig und robust im Handel erhältlich. Mit Hilfe von Frequenzfilterung können ungeeignete Frequenzen wie beispielsweise zu niedrige Dopplerfrequenzen oder Störfrequenzen eliminiert werden. Der erfindungsgemäße Schritt des Erfassens eines Frequenzunterschiedes kann durch Betrachtung nur des integrierten Signals erfolgen. Beispielsweise liegt die Dopplerfrequenz bei üblichen, in Luftzerlegungsanlagen auftretenden Strömungsgeschwindigkeiten bei 10 Hz bis 100 Hz. Besonders geeignet zum Bestrahlen des Gasstroms mit Sendestrahlung und/oder Empfangen der Streustrahlung ist/sind ein oder mehrere Radargerät/e.

Vorzugsweise ist die Sendestrahlung gepulste Radarstrahlung oder FMCW-Radarstrahlung. Das Verfahren kann ein Bestimmen einer Entfernung der sich bewegenden Objekte von einer vorbestimmten Bezugsgröße (beispielsweise einer ausgewählten Position, insbesondere der eines Senders) umfassen. Beispielsweise kann ein zeitlicher Abstand zwischen einem Aussenden eines Radarpulses und einem Erfassen seiner Streustrahlung detektiert und zu einer derartigen Berechnung herangezogen werden, oder eine Frequenzmodulation kann zum Markieren der Sendestrahlung und damit zur Entfernungsbestimmung verwendet werden.

Insbesondere bevorzugt ist eine Ausführungsform, bei der das Rohr oder der Behälter Teil eines Direktkontaktkühlers ist. Die sich bewegenden Objekte sind dabei vorzugsweise Wassertröpfchen. Im Falle üblicher Behälterdurchmesser zwischen etwa 0,1 m und etwa 5 m eignet sich insbesondere ein Radarsensor, der mit 24 GHz unter einem Winkel von 45° gegenüber einer Längsachse des Behälters oder gegenüber der Richtung des Gasstroms einstrahlt.

Besonders vorteilhaft ist es, wenn das Rohr oder der Behälter aus elektrisch nicht leitendem Material ist. Die Sendestrahlung kann dann von außen durch die Rohr- bzw. Behälterwandung gestrahlt werden, ein zugehöriges Sendemittel also außen am Rohr bzw. Behälter angebracht werden, und insbesondere kann auf einen Flansch o.ä. verzichtet werden. Dies erlaubt eine kostengünstige Nachrüstung einer entsprechenden Anlage, beispielsweise eines Direktkontaktkühlers. Alternativ kann der mindestens eine Sender und/oder der mindestens eine Empfänger im Innern des Rohres oder Behälters angeordnet werden.

Insbesondere können die erfindungsgemäßen Vorrichtungen (bzw. die erfindungsgemäßen Verfahren) zur Erkennung von festen Teilchen (wie z.B. Aschepartikeln) in Gasphasen eingesetzt werden, beispielsweise wenn sie wie erwähnt zur Überwachung und/oder Regelung der genannten Filter verwendet werden.

Erfindungsgemäß wird das Gasgemisch in Form des Gasstroms in einem Verdichtungsprozess verdichtet und in einem Entspannungsprozess entspannt. Dieser Verdichtungsprozess und dieser Entspannungsprozess sind Teil der kryogenen Gastrennung. Zweckmäßig wird vor und/oder nach dem Verdichtungsprozess und/oder dem Entspannungsprozess das Erkennen sich bewegender Objekte im Gasstrom durchgeführt. Je nach Ausgestaltung der kryogenen Gastrennung, den verwendeten Elementen und einer Empfindlichkeit der einzelnen Elemente gegenüber einem Tropfenmitriss kann es zweckmäßiger sein, das Erkennen sich bewegender Objekte im Gasstrom vor und/oder nach dem Verdichtungsprozess und/oder dem Entspannungsprozess durchzuführen.

Im Zuge der kryogenen Gastrennung kann auch ein (zumindest teilweise) verflüssigtes Gasgemisch in einem Verdampfungsprozess verdampft werden und wieder in einen gasförmigen Zustand in die Form des Gasstroms umgewandelt werden. Weiterhin kann das Gasgemisch in Form des Gasstroms in einem Kondensationsprozess wieder (zumindest teilweise) verflüssigt werden. Dabei kann insbesondere zweckmäßig vor und/oder nach dem Verdampfungsprozess und/oder dem Kondensationsprozess das Erkennen von sich bewegenden Objekten im Gasstrom durchgeführt werden. Beispielsweise bietet es sich dabei insbesondere an, nach dem Verdampfungsprozess das Erkennen von sich bewegenden Objekten im Gasstrom durchzuführen. Somit kann erkannt werden, ob im Zuge des Verdampfungsprozesses noch Flüssigkeitstropfen in dem Gasstrom vorhanden sind. Des Weiteren kann es sich insbesondere anbieten, vor dem Kondensationsprozess das Erkennen von sich bewegenden Objekten im Gasstrom durchzuführen. Somit kann erkannt werden, ob ein Tropfenmitriss in dem Gasstrom vorhanden ist, welcher die Elemente zur Kondensation des Gasstroms beschädigen könnte.

Alternativ oder zusätzlich kann das Erkennen sich bewegender Objekte vor und/oder nach einem Abscheidungsprozess im Gasstrom durchgeführt werden.

Bevorzugt wird das Gasgemisch mittels eines Drosselventils, einer Entspannungsturbine, eines Druckverlustes an einer Rohrleitung und/oder eines Krümmers entspannt. Weiter bevorzugt wird das Gasgemisch in einem mehrstufigen Verdichter verdichtet und abgekühlt, insbesondere mit Kühlern. Alternativ oder zusätzlich wird bevorzugt ein Taupunkt des Gasgemischs überwacht. Durch die Erfindung kann ein Schutz unterschiedlicher Stufen des Verdichtungsprozesses und/oder des Entspannungsprozesses sichergestellt werden.

Vorteilhafterweise werden unter Berücksichtigung des bestimmten Vorhandenseins, der bestimmten Anzahl und/oder des bestimmten Anteils an sich bewegender Objekte im Gasstrom die sich bewegenden Objekte aus dem Gasstrom herausgefiltert. Die sich bewegenden Objekte können auch erst dann herausgefiltert werden, wenn das bestimmte Vorhandensein, die bestimmte Anzahl und/oder der bestimmte Anteils einen Schwellwert erreicht. Als dieser Schwellwert kann beispielsweise ein Grenzwert gewählt werden, ab dem eine Beschädigung eines Elements der kryogenen Gastrennung eintreten kann. Alternativ oder zusätzlich können auch weitere zweckmäßige Maßnahmen in Abhängigkeit von dem bestimmten Vorhandensein, von der bestimmten Anzahl und/oder von dem bestimmten Anteil an sich bewegenden Objekte im Gasstrom durchgeführt werden. Das bestimmte Vorhandensein, die bestimmte Anzahl und/oder der bestimmte Anteil an sich bewegenden Objekte im Gasstrom kann auch für eine Bestimmung einer Reinheit bzw. eines Grads der Verunreinigung der getrennten Gase des Gasgemischs genutzt werden.

Insbesondere bietet sich diese Ausgestaltung für einen Abscheider an, insbesondere für einen Abscheider nach Direktkontaktapparaten. Insbesondere kann ein derartiger Abscheider in dem ersten erfindungsgemäßen Verfahren bzw. der ersten erfindungsgemäßen Vorrichtung zur Trennung von Gasen des Gasgemischs genutzt werden. Mittels des Abscheiders kann dabei das Herausfiltern der sich bewegenden Objekte durchgeführt werden. Mittels des bestimmten Vorhandenseins, der bestimmten Anzahl und/oder des bestimmten Anteils sich bewegender Objekte im Gasstrom kann der Abscheider überwacht und/oder geregelt werden.

Besonders bevorzugt ist die Erfindung für Direktkontaktkühler bzw. für Direktkontaktapparate für eine Luftzerlegungsanlage bzw. als eine Luftzerlegungsanlage selbst ausgebildet. Dabei ist insbesondere die zweite erfindungsgemäße Vorrichtung als ein Direktkontaktkühler einer Luftzerlegungsanlage ausgebildet. Analog wird das zweite erfindungsgemäße Verfahren insbesondere in einem Direktkontaktkühler einer Luftzerlegungsanlage ausgeführt. Die erste erfindungsgemäße Vorrichtung ist dabei insbesondere als eine Luftzerlegungsanlage ausgebildet bzw. das erste erfindungsgemäße Verfahren wird in einer Luftzerlegungsanlage durchgeführt. Insbesondere bietet es sich im Rahmen der Erfindung an, das Erkennen von sich bewegenden Objekten in dem Gasstrom in einer Luftzerlegungsanlage zwischen einem Molsieb und einer Coldbox durchzuführen.

Figurenbeschreibung

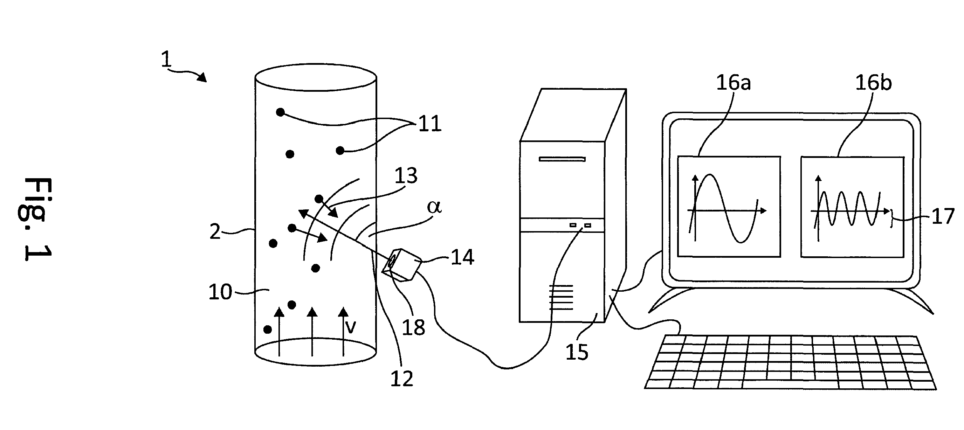

Figur 1    zeigt eine beispielhafte Ausführungsform einer erfindungsgemäßen Vorrichtung.

In der Figur 1 ist schematisch eine Vorrichtung 1 zum Erkennen von sich bewegenden Objekten in einem Gasstrom dargestellt. Die Vorrichtung umfasst ein Rohr 2, durch das (im dargestellten Fall) von unten nach oben ein Gasstrom 10 mit einer Geschwindigkeit v geleitet wird. Vom Gasstrom werden Objekte 11 mitgerissen, beispielsweise Wassertröpfchen oder feste Partikel.

Das Rohr 2 ist dabei insbesondere als ein Teil einer Luftzerlegungsanlage ausgebildet. In der Luftzerlegungsanlage werden Gase eines Gasgemischs in Form des Gasstroms getrennt. Beispielsweise kann der Gasstrom in dem Rohr 2 einem Verdichter zugeführt werden, um in einem Verdichtungsprozess verdichtet zu werden. Beispielsweise kann der Gasstrom in dem Rohr 2 auch einem Drosselventil zugeführt werden, um in einem Entspannungsprozess entspannt zu werden. Insbesondere kann das Rohr 2 auch zwischen einem Molsieb und einer Coldbox der Luftzerlegungsanlage angeordnet sein.

Außerhalb des Rohrs 2 befindet sich ein Radargerät 14, das einen Sender 18 für elektromagnetische Sendestrahlung 12 im Mikrowellen- oder Terahertzbereich umfasst. Unter einem Einstrahlwinkel $\alpha$ bestrahlt der Sender den Gasstrom mit der Sendestrahlung. Im gezeigten Beispiel wird der Einstrahlwinkel in Bezug auf die Gasstromrichtung gemessen, er könnte aber auch gegenüber einer beliebigen fest gewählten Vergleichsrichtung bestimmt sein, beispielsweise gegenüber der Horizontalen oder der Vertikalen (die im gezeigten Beispiel mit der Gasstromrichtung übereinstimmt).

Die sich mit dem Gasstrom 10 bewegenden Objekte 11 reflektieren die Sendestrahlung. Aufgrund der Bewegung der Objekte entsteht dabei ein Dopplersignal, dessen Frequenz von der Relativgeschwindigkeit der Objekte 11 in Richtung der Radarstrahlung 12 und damit von der Strömungsgeschwindigkeit abhängt.

Die Streustrahlung 13 wird vom Radargerät 14, das einen geeigneten, nicht gezeigten Empfänger aufweist, erfasst. An das Radargerät angeschlossen ist eine Recheneinheit 15, die eingerichtet ist, den Frequenzunterschied zwischen der Sendestrahlung 12 und der erfassten Streustrahlung 13 zu erfassen. Dies ist in der Figur durch nebeneinandergestellte schematische Wellengraphen 16a (für die Sendestrahlung) und 16b (für die Streustrahlung) dargestellt. Aus dem Unterschied können auf das Vorhandensein der sich im Gasstrom bewegenden Objekte 11 und ihre Geschwindigkeit bzw. ihre Geschwindigkeitsverteilung bestimmt werden. Eine Auswertung der Amplitude 17 der Streustrahlung lässt Rückschlüsse auf die Anzahl der bewegten Objekte im Gasstrom (pro Volumeneinheit) zu.

Mittels dieser Anzahl der bewegten Objekte im Gasstrom (pro Volumeneinheit) wird ein Anteil der bewegten Objekte in dem Gasstrom bestimmt. Dieser bestimmte Anteil wird für die Luftzerlegung in der Luftzerlegungsanlage berücksichtigt. Die Recheneinheit 15 kann diesen bestimmten Anteil beispielsweise an ein Steuergerät der Luftzerlegungsanlage weiterleiten. Das Steuergerät steuert einzelne Elemente bzw. Bauteile der Luftzerlegungsanlage in Abhängigkeit von diesem bestimmten Anteil an.

Alternativ oder zusätzlich kann das Rohr 2 ein Teil eines der folgenden Elemente sein: eines Tropfenabscheiders; eines Direktkontaktkühlers, eines Verdampfers, eines Massenkraftabscheiders, eines Zyklonabscheiders, eines Elektrofilters oder eines Gaswäschers sein. Dieses entsprechende Element ist dann ein Bestandteil der Luftzerlegungsanlage. Mittels des bestimmten Anteils der bewegten Objekte in dem Gasstrom wird das entsprechende Element durch die Recheneinheit 15 geregelt.

Bezugszeichenliste:

| | |
|---|---|
| 1 | Vorrichtung zum Erkennen bewegter Objekte in einem Gasstrom |
| 2 | Rohr |
| 10 | Gasstrom |
| 11 | bewegte Objekte |
| 12 | Sendestrahlung |
| 13 | Streustrahlung |
| 14 | Radargerät |
| 15 | Recheneinheit |
| 16a | Graph der Sendestrahlung |
| 16b | Graph der Streustrahlung |
| 17 | Amplitude der Streustrahlung |
| $\alpha$ | Einstrahlwinkel |

**Patentansprüche**

1. Verfahren zur Trennung von Gasen eines Gasgemischs in Form eines Gasstroms, wobei

   - das Gasgemisch in Form des Gasstroms in einem Verdichtungsprozess verdichtet und in einem Entspannungsprozess entspannt wird,
   - der Gasstrom mit elektromagnetischer Sendestrahlung (12) im Mikrowellen- oder Terahertzbereich bestrahlt wird,
   - Streustrahlung (13) erfasst wird, wobei die Streustrahlung durch Streuung der Sendestrahlung an mindestens einem Objekt (11) im Gasstrom entsteht,
   - ein Frequenzunterschied zwischen der Streustrahlung und der Sendestrahlung erfasst wird,

   **dadurch gekennzeichnet, dass**

   - vor und/oder nach dem Verdichtungsprozess und/oder dem Entspannungsprozess aus dem Frequenzunterschied ein Vorhandensein, eine Anzahl und/oder ein Anteil sich bewegender Objekte im Gasstrom bestimmt wird und

- die Trennung der Gase des Gasgemischs unter Berücksichtigung des bestimmten Vorhandenseins, der bestimmten Anzahl und/oder des bestimmten Anteils sich bewegender Objekte im Gasstrom durchgeführt wird, wobei in Abhängigkeit von dem bestimmten Vorhandensein, von der bestimmten Anzahl und/oder von dem bestimmten Anteil Maßnahmen zum Schutz von Elementen, welche im Rahmen der Trennung von Gasen genutzt werden, durchgeführt werden, die durch die sich bewegenden Objekte im Gasstrom beschädigt werden können.

2. Verfahren zur Überwachung und/oder Regelung von Elementen, welche im Rahmen einer kryogenen Gastrennung genutzt werden, wobei im Zuge der kryogenen Gastrennung ein Gasgemisch in Form eines Gasstroms (10) in einem Verdichtungsprozess verdichtet und in einem Entspannungsprozess entspannt wird,
wobei

    - sich bewegende Objekte (11) in dem Gasstrom (10) erkannt werden, indem
    - der Gasstrom mit elektromagnetischer Sendestrahlung (12) im Mikrowellen- oder Terahertzbereich bestrahlt wird,
    - Streustrahlung (13), die durch Streuung der Sendestrahlung an mindestens einem Objekt (11) im Gasstrom entsteht, erfasst wird
    - ein Frequenzunterschied zwischen der Streustrahlung und der Sendestrahlung erfasst wird,
    **dadurch gekennzeichnet, dass**
    - vor und/oder nach dem Verdichtungsprozess und/oder dem Entspannungsprozess aus dem Frequenzunterschied ein Vorhandensein, eine Anzahl und/oder ein Anteil sich bewegender Objekte im Gasstrom bestimmt wird, und

die Überwachung und/oder Reglung von den Elementen unter Berücksichtigung des bestimmten Vorhandenseins, der bestimmten Anzahl und/oder des bestimmten Anteils sich bewegender Objekte im Gasstrom durchgeführt wird.

3. Verfahren nach Anspruch 2, wobei die Elemente, welche im Rahmen einer kryogenen Gastrennung genutzt werden, als ein Tropfenabscheider, ein Direktkontaktkühler, ein Verdampfer, bei dem bei nicht vollständiger Verdampfung Tropfen mitgerissen werden, ein Massenkraftabscheider, ein Zyklonabscheider, ein Elektrofilter oder ein Gaswäscher ausgebildet sind.

4. Verfahren nach einem der vorstehenden Ansprüche, wobei das Gasgemisch mittels eines Drosselventils, einer Entspannungsturbine, eines Druckverlustes an einer Rohrleitung und/oder eines Krümmers entspannt wird.

5. Verfahren nach einem der vorstehenden Ansprüche, wobei das Gasgemisch in einem mehrstufigen Verdichter verdichtet und abgekühlt wird und/oder ein Taupunkt des Gasgemischs überwacht wird.

6. Verfahren nach einem der vorstehenden Ansprüche, wobei unter Berücksichtigung das bestimmten Vorhandenseins, der bestimmten Anzahl und/oder des bestimmten Anteils sich bewegender Objekte im Gasstrom die sich bewegenden Objekte aus dem Gasstrom herausgefiltert werden.

7. Verfahren gemäß einem der vorstehenden Ansprüche, wobei das Bestimmen des Vorhandenseins, der Anzahl und/oder des Anteils sich bewegender Objekte im Gasstrom umfasst:

    Vergleichen eines oder mehrerer Parameter/s (17) der erfassten Streustrahlung mit einem oder mehreren vorbestimmten Schwellwert/en; und
    Feststellen, dass der oder die Parameter jeweils innerhalb oder außerhalb eines durch den oder die Schwellwerte gegebenen Vergleichsintervalls liegt/liegen.

8. Verfahren gemäß einem der vorstehenden Ansprüche, das zudem umfasst:

    Bestimmen einer Frequenz der Streustrahlung und/oder einer Frequenz eines aus der Sende- und der Streustrahlung resultierenden Dopplersignals;
    Bestimmen, aus der Frequenz der Streustrahlung bzw. des Dopplersignals, einer Relativgeschwindigkeit der sich bewegenden Objekte in Richtung der Sendestrahlung und/oder einer Strömungsgeschwindigkeit der sich bewegenden Objekte in Richtung des Gasstroms.

9. Verfahren gemäß einem der vorstehenden Ansprüche, das zudem umfasst:

    Bestimmen einer Signalstärke (17) der Streustrahlung und/oder einer Signalstärke eines aus der Sende- und der Streustrahlung resultierenden Dopplersignals;
    Bestimmen, aus der Signalstärke der Streustrahlung bzw. des Dopplersignals, einer Kenngröße, die einer mittleren Größe sich bewegender Objekte und/oder einer Anzahl an sich bewegenden Objekten pro Volumeneinheit im Gasstrom entspricht.

10. Verfahren gemäß einem der vorstehenden Ansprüche, wobei die Sendestrahlung schräg oder parallel oder senkrecht zur Richtung des Gasstroms und/oder unter wechselnden Einstrahlwinkeln ($\alpha$) und/oder mit wechselnden Sendefrequenzen ausgestrahlt wird.

11. Verfahren gemäß einem der vorstehenden Ansprüche, wobei die Sendestrahlung von einem oder mehreren Radargerät/en (14) ausgestrahlt wird, wobei das Verfahren ein Bestimmen einer Entfernung oder eines Entfernungsbereichs der sich bewegenden Objekte von einer vorbestimmten Bezugsgröße umfasst.

12. Verfahren gemäß einem der vorstehenden Ansprüche, das ein Bestimmen einer Strömungsgeschwindigkeit des Gasstroms umfasst.

13. Verfahren gemäß einem der vorstehenden Ansprüche, wobei die sich bewegenden Objekte Feststoffe oder Tröpfchen einer Flüssigkeit sind.

14. Vorrichtung zur Trennung von Gasen eines Gasgemischs in einem Gasstrom, aufweisend

    - wobei die Vorrichtung dazu eingerichtet ist, das Gasgemisch in Form des Gasstroms in einem Verdichtungsprozess zu verdichten und in einem Entspannungsprozess zu entspannen
    - mindestens einen Sender (18) zum Bestrahlen des Gasstroms mit elektromagnetischer Sendestrahlung (12) im Mikrowellen- oder Terahertzbereich
    - mindestens einen Empfänger zum Detektieren einer Streustrahlung (13), wenn diese durch Streuung der Sendestrahlung an mindestens einem Objekt (11) im oder am Gasstrom entsteht und
    - Mittel (15) zum Erfassen eines Frequenzunterschiedes zwischen der Streustrahlung und der Sendestrahlung,

    **dadurch gekennzeichnet, dass**

    - die Mittel dazu eingerichtet sind, vor und/oder nach dem Verdichtungsprozess und/oder dem Entspannungsprozess aus dem erfassten Frequenzunterschied ein Vorhandensein, eine Anzahl und/oder einen Anteils sich bewegender Objekte (11) im Gasstrom zu bestimmen,
    - wobei die Vorrichtung dazu eingerichtet ist, . die Trennung der Gase des Gasgemischs unter Berücksichtigung der Bestimmung der Mittel (15) zum Erfassen des Frequenzunterschiedes durchzuführen, wobei die Vorrichtung dazu eingerichtet ist, in Abhängigkeit von dem bestimmten Vorhandensein, von der bestimmten Anzahl und/oder von dem bestimmten Anteil Maßnahmen zum Schutz von Elementen, welche im Rahmen der Trennung von Gasen genutzt werden, durchzuführen, die durch die sich bewegenden Objekte (11) im Gasstrom beschädigt werden können.

15. Vorrichtung (1) zur Überwachung und/oder Regelung von Elementen, welche im Rahmen einer kryogenen Gastrennung genutzt werden, wobei im Zuge der kryogenen Gastrennung ein Gasgemisch in Form eines Gasstroms (10) in einem Verdichtungsprozess verdichtet und in einem Entspannungsprozess entspannt wird, die aufweist:

    ein Rohr (2) oder einen Behälter zum Durchleiten des Gasstroms;

    **dadurch gekennzeichnet dass**

    die Vorrichtung (1) weiterhin aufweist:

    mindestens einen Sender (18) zum Bestrahlen des Gasstroms mit elektromagnetischer Sendestrahlung (12) im Mikrowellen- oder Terahertzbereich;
    mindestens einen Empfänger zum Detektieren einer Streustrahlung (13), wenn diese durch Streuung der Sendestrahlung an mindestens einem Objekt (11) im oder am Gasstrom entsteht; und
    Mittel (15) zum Erfassen eines Frequenzunterschiedes zwischen der Streustrahlung und der Sendestrahlung vor und/oder nach dem Verdichtungsprozess und/oder dem Entspannungsprozess, wobei die Mittel (15) Datenverarbeitungsmittel zur Auswertung eines oder mehrerer Parameter/n (17) der Streustrahlung umfassen, um aus dem Frequenzunterschied ein Vorhandensein, eine Anzahl und/oder einen Anteil sich bewegender Objekte (11) im Gasstrom zu bestimmen, wobei die Überwachung und/oder Reglung von den Elementen unter Berücksichtigung des bestimmten Vorhandenseins, der bestimmten Anzahl und/ oder des bestimmten Anteils sich bewegender Objekte im Gasstrom durchgeführt wird.

16. Vorrichtung gemäß Anspruch 14 oder 15, wobei der mindestens eine Sender und der mindestens eine Empfänger Komponenten eines oder mehrerer Radargerät/e (14) sind.

17. Vorrichtung gemäß einem der Ansprüche 14 bis 16, wobei der oder die Sender eingerichtet ist/sind, den Gasstrom schräg oder parallel oder senkrecht zur Strömungsrichtung zu bestrahlen.

**18.** Vorrichtung gemäß einem der Ansprüche 14 bis 17, wobei der oder die Sender eingerichtet ist/sind, den Gasstrom schräg variabel aus veränderlicher Richtung und/oder gleichzeitig aus mehreren Richtungen zu bestrahlen.

**19.** Vorrichtung gemäß einem der Ansprüche 14 bis 18, wobei die Mittel (15) zum
Erfassen eines Frequenzunterschiedes Datenverarbeitungsmittel zur Auswertung eines oder mehrerer Parameter/n (17) der Streustrahlung umfassen und/oder
zum Vergleichen eines oder mehrerer Parameter/s der erfassten Streustrahlung (13) mit einem oder mehreren vorbestimmten Schwellwert/en und zum Feststellen, dass der oder die Parameter jeweils innerhalb eines durch den oder die Schwellwerte gegebenen Vergleichsintervalls liegt/liegen; und/oder zum Bestimmen einer Frequenz der Streustrahlung und/oder einer Frequenz eines aus der Sende- und der Streustrahlung resultierenden Dopplersignals, und zum Bestimmen, aus der Frequenz der Streustrahlung bzw. des Dopplersignals, einer Relativgeschwindigkeit der sich bewegenden Objekte in Richtung der Sendestrahlung; und/oder
zum Bestimmen einer Signalstärke (17) der Streustrahlung und/oder einer Signalstärke eines aus der Sende- und der Streustrahlung resultierenden Dopplersignals, und zum Bestimmen, aus der Signalstärke der Streustrahlung bzw. des Dopplersignals, einer Kenngröße, die einer mittleren Größe von sich bewegenden Objekten und/oder einer Anzahl an sich bewegenden Objekten pro Volumeneinheit im Gasstrom entspricht; und/oder
zum Bestimmen einer Entfernung der sich bewegenden Objekte vom Empfänger (14); und/oder
zum Bestimmen einer Strömungsgeschwindigkeit des Gasstroms; und/oder
zum Fusionieren des oder der Parameter/s mit Daten, die von einem oder mehreren externen Sensoren geliefert werden, wobei der oder die externen Sensoren auf anderen Messprinzipien als Doppler-Radar basieren, ausgebildet sind.

**20.** Vorrichtung gemäß einem der Ansprüche 14 bis 19, die zudem ein Filter umfasst, das geeignet ist, durch Streuung der Sendestrahlung an unbewegten Objekten (2) entstehende Strahlung zu diskriminieren.

**21.** Vorrichtung gemäß einem der Ansprüche 14 bis 20, die als Direktkontaktkühler für eine Luftzerlegungsanlage oder als eine Luftzerlegungsanlage ausgebildet ist.

**Claims**

**1.** Method for separating gases of a gas mixture in the form of a gas stream,
wherein

- the gas mixture in the form of the gas stream is compressed in a compression process and allowed to expand in an expansion process,
- the gas stream is irradiated with electromagnetically emitted radiation (12) in the microwave or tetrahertz range,
- scattered radiation (13) is detected, the scattered radiation arising due to scattering of the emitted radiation at at least one object (11) in the gas stream,
- a difference in frequency between the scattered radiation and the emitted radiation is detected,

**characterized in that**

- a presence, a number and/or a proportion of moving objects in the gas stream is/are determined from the difference in frequency before and/or after the compression process and/or the expansion process and
- the separation of the gases of the gas mixture is carried out while taking into account the determined presence, the determined number and/or the determined proportion of moving objects in the gas stream, measures for protecting elements that are used in the course of the separation of gases and that could be damaged by the moving objects in the gas stream being carried out in dependence on the determined presence, the determined number and/or the determined proportion.

**2.** Method for monitoring and/or controlling elements that are used in the course of cryogenic gas separation, wherein, during the cryogenic gas separation, a gas mixture in the form of a gas stream (10) is compressed in a compression process and allowed to expand in an expansion process, wherein

- moving objects (11) in the gas stream (10) are detected, in that
- the gas stream is irradiated with electromagnetically emitted radiation (12) in the microwave or tetrahertz range,
- scattered radiation (13) that arises due to scattering of the emitted radiation at at least one object (11) in the gas stream is detected,
- a difference in frequency between the scattered radiation and the emitted radiation is detected,

**characterized in that**

- a presence, a number and/or a proportion of moving objects in the gas stream is determined from the difference in frequency before and/or after the compression process and/or the expansion process, and the monitoring and/or control of the elements is carried out while taking into account the determined presence, the determined number and/or the determined proportion of moving objects in the gas stream.

3.  Method according to Claim 2, wherein the elements that are used in the course of cryogenic gas separation are formed as a droplet separator, a direct-contact cooler, an evaporator with which droplets are entrained in the case of incomplete evaporation, an inertia-force separator, a cyclone separator, an electrofilter or a gas scrubber.

4.  Method according to one of the preceding claims, the gas mixture being allowed to expand by means of a throttle valve, an expansion turbine, a pressure loss at a pipeline and/or a bend.

5.  Method according to one of the preceding claims, the gas mixture being compressed and cooled in a multistage compressor and/or a dew point of the gas mixture being monitored.

6.  Method according to one of the preceding claims, the moving objects being filtered out from the gas stream while taking into account the determined presence, the determined number and/or the determined proportion of moving objects in the gas stream.

7.  Method according to one of the preceding claims, the determining of the presence, the number and/or the proportion of moving objects in the gas stream comprising:

    comparing one or more parameters (17) of the detected scattered radiation with one or more predetermined threshold values; and establishing that the parameter or parameters respectively lies/lie within or outside a comparison interval given by the threshold value or values.

8.  Method according to one of the preceding claims, which additionally comprises:

    determining a frequency of the scattered radiation and/or a frequency of a Doppler signal resulting from the emitted radiation and the scattered radiation; determining from the frequency of the scattered radiation or the Doppler signal a relative velocity of the moving objects in the direction of the emitted radiation and/or a flow velocity of the moving objects in the direction of the gas stream.

9.  Method according to one of the preceding claims, which additionally comprises:

    determining a signal strength (17) of the scattered radiation and/or a signal strength of a Doppler signal resulting from the emitted radiation and the scattered radiation; determining from the signal strength of the scattered radiation or the Doppler signal a characteristic variable that corresponds to an average size of moving objects and/or a number of moving objects per unit of volume in the gas stream.

10. Method according to one of the preceding claims, the emitted radiation being emitted obliquely or parallel or perpendicularly in relation to the direction of the gas stream and/or at changing irradiating angles ($\alpha$) and/or at changing emission frequencies.

11. Method according to one of the preceding claims, the emitted radiation being emitted by one or more radar devices (14), the method comprising determining a distance or a distance range of the moving objects from a predetermined reference value.

12. Method according to one of the preceding claims, which comprises determining a flow velocity of the gas stream.

13. Method according to one of the preceding claims, the moving objects being solids or droplets of a liquid.

14. Device for separating gases of a gas mixture in a gas stream, having

    - the device being designed for compressing the gas mixture in the form of the gas stream in a compression process and allowing it to expand in an expansion process,
    - at least one emitter (18) for irradiating the gas stream with electromagnetically emitted radiation (12) in the microwave or tetrahertz range,
    - at least one receiver for detecting scattered radiation (13) when the latter arises due to scattering of the emitted radiation at at least one object (11) in the or at the gas stream and
    - means (15) for detecting a difference in frequency between the scattered radiation and the emitted radiation,

    **characterized in that**

    - the means are designed for determining a presence, a number and/or a proportion of moving objects (11) in the gas stream from the detected difference in frequency before and/or after the compression process and/or the expansion process,

- the device being designed for carrying out the separation of the gases of the gas mixture while taking into account the determination of the means (15) for detecting the difference in frequency, the device being designed for carrying out measures for protecting elements that are used in the course of the separation of gases and that could be damaged by the moving objects (11) in the gas stream in dependence on the determined presence, the determined number and/or the determined proportion.

15. Device (1) for monitoring and/or controlling elements that are used in the course of cryogenic gas separation, wherein, during the cryogenic gas separation, a gas mixture in the form of a gas stream (10) is compressed in a compression process and allowed to expand in an expansion process, which device has:

    a pipe (2) or a vessel for conducting the gas stream through;

    **characterized in that**

    - the device (1) also has:

        at least one emitter (18) for irradiating the gas stream with electromagnetically emitted radiation (12) in the microwave or tetrahertz range;
        at least one receiver for detecting scattered radiation (13) when the latter arises due to scattering of the emitted radiation at at least one object (11) in the or at the gas stream; and
        means (15) for detecting a difference in frequency between the scattered radiation and the emitted radiation before and/or after the compression process and/or the expansion process, the means (15) comprising data processing means for the evaluation of one or more parameters (17) of the scattered radiation, in order to determine a presence, a number and/or a proportion of moving objects (11) in the gas stream from the difference in frequency, wherein the monitoring and/or control of the elements is carried out while taking into account the determined presence, the determined number and/or the determined proportion of moving objects in the gas stream.

16. Device according to Claim 14 or 15, the at least one emitter and the at least one receiver being components of one or more radar devices (14).

17. Device according to one of Claims 14 to 16, the emitter or emitters being designed for irradiating the gas stream obliquely or parallel or perpendicularly in relation to the direction of flow.

18. Device according to one of Claims 14 to 17, the emitter or emitters being designed for irradiating the gas stream obliquely variably from different directions and/or at the same time from a number of directions.

19. Device according to one of Claims 14 to 18, the means (15) for detecting a difference in frequency comprising data processing means for the evaluation of one or more parameters (17) of the emitted radiation and/or being formed
    for comparing one or more parameters of the detected scattered radiation (13) with one or more predetermined threshold values and for establishing that the parameter or parameters respectively lies/lie within a comparison interval given by the threshold value or values; and/or
    for determining a frequency of the scattered radiation and/or a frequency of a Doppler signal resulting from the emitted radiation and the scattered radiation, and for determining from the frequency of the scattered radiation or the Doppler signal a relative velocity of the moving objects in the direction of the emitted radiation; and/or
    for determining a signal strength (17) of the scattered radiation and/or a signal strength of a Doppler signal resulting from the emitted radiation and the scattered radiation, and for determining from the signal strength of the scattered radiation or the Doppler signal a characteristic variable that corresponds to an average size of moving objects and/or a number of moving objects per unit of volume in the gas stream; and/or
    for determining a distance of the moving objects from the receiver (14); and/or
    for determining a flow velocity of the gas stream; and/or
    for fusing the parameter or parameters with data that are supplied by one or more external sensors, the external sensor or sensors being based on measuring principles other than Doppler radar.

20. Device according to one of Claims 14 to 19, which also comprises a filter that is suitable for discriminating radiation that arises due to scattering of the emitted radiation at stationary objects (2).

21. Device according to one of Claims 14 to 20, which is formed as a direct-contact cooler for an air separating installation or as an air separating installation.

**Revendications**

1. Procédé de séparation de gaz d'un mélange de gaz sous la forme d'un courant gazeux, dans lequel

   - on comprime le mélange de gaz en forme de courant gazeux dans un processus de compression et on le détend dans un processus de détente,
   - on expose le courant gazeux à un rayonnement électromagnétique émis (12) dans le domaine des microondes ou des térahertz,
   - on détecte un rayonnement diffusé (13), dans lequel le rayonnement diffusé naît de la diffusion du rayonnement émis sur au moins un objet (11) dans le courant gazeux,
   - on détecte une différence de fréquence entre le rayonnement diffusé et le rayonnement émis,

   **caractérisé en ce que**

   - avant et/ou après le processus de compression et/ou le processus de détente, on détecte à partir de la différence de fréquence la présence, le nombre et/ou une proportion d'objets en mouvement dans le courant gazeux, et
   - on opère la séparation des gaz du mélange de gaz en tenant compte de la présence déterminée, du nombre déterminé et/ou de la proportion déterminée d'objets en mouvement dans le courant gazeux, dans lequel on met en oeuvre, en fonction de la présence déterminée, du nombre déterminé et/ou de la proportion déterminée, des mesures destinées à protéger des éléments, qui sont utilisés dans le cadre de la séparation de gaz, qui peuvent être endommagés par les objets en mouvement dans le courant gazeux.

2. Procédé pour la surveillance et/ou la régulation d'éléments qui sont utilisés dans le cadre d'une séparation cryogénique de gaz, dans lequel, au cours de la séparation cryogénique de gaz, on comprime un mélange de gaz sous la forme d'un courant gazeux (10) dans un processus de compression et on le détend dans un processus de détente, dans lequel

   - on détecte des objets en mouvement (11) dans le courant gazeux (10), par le fait que
   - on expose le courant gazeux à un rayonnement électromagnétique émis (12) dans le domaine des microondes ou des térahertz,
   - on détecte un rayonnement diffusé (13), qui naît de la diffusion du rayonnement émis sur au moins un objet (11) dans le courant gazeux,
   - on détecte une différence de fréquence entre le rayonnement diffusé et le rayonnement émis,

   **caractérisé en ce que**

   - avant et/ou après le processus de compression et/ou le processus de détente, on détermine à partir de la différence de fréquence une présence, un nombre et/ou une proportion d'objets en mouvement dans le courant gazeux, et
   - on opère la surveillance et/ou la régulation des éléments en tenant compte de la présence déterminée, du nombre déterminé et/ou de la proportion déterminée d'objets en mouvement dans le courant gazeux.

3. Procédé selon la revendication 2, dans lequel les éléments, qui sont utilisés dans le cadre de la séparation de gaz cryogénique, se présentent sous la forme d'un séparateur de gouttes, d'un refroidisseur à contact direct, d'un évaporateur, dans lequel des gouttes sont entraînées en cas d'évaporation incomplète, d'un séparateur à force inertielle, d'un séparateur à cyclone, d'un électrofiltre ou d'un laveur de gaz.

4. Procédé selon l'une quelconque des revendications précédentes, dans lequel on détend le mélange de gaz au moyen d'une soupape d'étranglement, d'une turbine de détente, d'une perte de pression à une conduite et/ou d'un tuyau coudé.

5. Procédé selon l'une quelconque des revendications précédentes, dans lequel on comprime et on refroidit le mélange de gaz dans un compresseur à plusieurs étages et/ou on surveille un point de rosée du mélange de gaz.

6. Procédé selon l'une quelconque des revendications précédentes, dans lequel on filtre les objets en mouvement hors du courant gazeux en tenant compte de la présence déterminée, du nombre déterminé et/ou de la proportion déterminée d'objets en mouvement dans le courant gazeux.

7. Procédé selon l'une quelconque des revendications précédentes, dans lequel la détermination de la présence, du nombre et/ou de la proportion d'objets en mouvement dans le courant gazeux comprend:

   - la comparaison d'un ou de plusieurs paramètre(s) (17) du rayonnement diffusé détecté avec une ou plusieurs valeur(s) de seuil prédéterminée(s); et
   - la constatation que le ou les paramètre (s) se situe(nt) respectivement à l'intérieur ou à l'extérieur d'un intervalle de comparaison fixé par la ou les valeur(s) de seuil.

8. Procédé selon l'une quelconque des revendications précédentes, qui comprend en outre:

- la détermination d'une fréquence du rayonnement diffusé et/ou d'une fréquence d'un signal Doppler résultant du rayonnement émis et du rayonnement diffusé;
- la détermination, à partir de la fréquence du rayonnement diffusé ou du signal Doppler, d'une vitesse relative des objets en mouvement dans la direction du rayonnement diffusé et/ou d'une vitesse d'écoulement des objets en mouvement dans la direction du courant gazeux.

9. Procédé selon l'une quelconque des revendications précédentes, qui comprend en outre:

- la détermination d'une intensité de signal (17) du rayonnement diffusé et/ou d'une intensité de signal d'un signal Doppler résultant du rayonnement émis et du rayonnement diffusé;
- la détermination, à partir de l'intensité du signal du rayonnement diffusé ou du signal Doppler, d'une grandeur caractéristique, qui correspond à une grandeur moyenne des objets en mouvement et/ou à un nombre d'objets en mouvement par unité de volume dans le courant gazeux.

10. Procédé selon l'une quelconque des revendications précédentes, dans lequel on émet le rayonnement émis en oblique ou parallèlement ou perpendiculairement à la direction du courant gazeux et/ou sous des angles d'incidence variables ($\alpha$) et/ou avec des fréquences d'émission variables.

11. Procédé selon l'une quelconque des revendications précédentes, dans lequel on émet le rayonnement émis au moyen d'un ou de plusieurs appareil(s) radar (14), dans lequel le procédé comprend une détermination d'une distance ou d'une plage de distance des objets en mouvement par rapport à une grandeur de référence prédéterminée.

12. Procédé selon l'une quelconque des revendications précédentes, qui comprend une détermination d'une vitesse d'écoulement du courant gazeux.

13. Procédé selon l'une quelconque des revendications précédentes, dans lequel les objets en mouvement sont des substances solides ou des gouttes d'un liquide.

14. Dispositif de séparation de gaz d'un mélange de gaz dans un courant gazeux, présentant

- un dispositif qui est conçu pour comprimer le mélange de gaz sous la forme du courant gazeux dans un processus de compression et pour le détendre dans un processus de détente,
- au moins un émetteur (18) pour exposer le courant gazeux à un rayonnement électromagnétique émis (12) dans le domaine des microondes ou des térahertz,
- au moins un récepteur pour détecter un rayonnement diffusé (13), lorsque celui-ci naît de la diffusion du rayonnement émis sur au moins un objet (11) dans ou sur le courant gazeux, et
- des moyens (15) pour détecter une différence de fréquence entre le rayonnement diffusé et le rayonnement émis,

**caractérisé en ce que**

- les moyens sont conçus pour déterminer, avant et/ou après le processus de compression et/ou le processus de détente, à partir de la différence de fréquence, une présence, un nombre et/ou une proportion d'objets en mouvement (11) dans le courant gazeux,
- dans lequel le dispositif est conçu pour opérer la séparation des gaz du mélange de gaz en tenant compte de la détermination des moyens (15) pour détecter la différence de fréquence,
- dans lequel le dispositif est conçu pour mettre en oeuvre, en fonction de la présence déterminée, du nombre déterminé et/ou de la proportion déterminée, des mesures destinées à protéger des éléments qui sont utilisés dans le cadre de la séparation de gaz, qui peuvent être endommagés par les objets en mouvement (11) dans le courant gazeux.

15. Dispositif (1) pour la surveillance et/ou la régulation d'éléments, qui sont utilisés dans le cadre de la séparation cryogénique de gaz, dans lequel, au cours de la séparation cryogénique, on comprime un mélange de gaz sous la forme d'un courant gazeux (10) dans un processus de compression et on le détend dans un processus de détente, qui présente un tube (2) ou un récipient pour la conduite du courant gazeux, **caractérisé en ce que** le dispositif (1) comprend en plus:

- au moins un émetteur (18) pour exposer le courant gazeux à un rayonnement électromagnétique émis (12) dans le domaine des microondes ou des térahertz;
- au moins un récepteur pour détecter un rayonnement diffusé (13), lorsque celui-ci naît de la diffusion du rayonnement émis sur au moins un objet (11) dans ou sur le courant gazeux; et
- des moyens (15) pour détecter une différence de fréquence entre le rayonnement diffusé et le rayonnement émis avant et/ou après le processus de compression et/ou le processus de détente, dans lequel les moyens (15) comprennent des moyens de traitement de données pour l'évaluation d'un ou de plusieurs paramètre(s) du rayonnement diffusé, afin de déterminer, à partir de la différence de fréquence, une présence, un nombre et/ou une proportion d'objets en mouvement (11) dans le courant gazeux,
- dans lequel on opère la surveillance et/ou la régulation des objets en tenant compte de la présence déterminée, du nombre déterminé et/ou de la proportion déterminée d'objets en mouvement dans le courant gazeux.

16. Dispositif selon la revendication 14 ou 15, dans lequel ledit au moins un émetteur et ledit au moins un récepteur sont des composants d'un ou de plusieurs appareil(s) radar (14).

17. Dispositif selon l'une quelconque des revendications 14 à 16, dans lequel le ou les émetteur(s) est/sont conçu(s) pour exposer le courant gazeux à un rayonnement oblique ou parallèle ou perpendiculaire à la direction d'écoulement.

18. Dispositif selon l'une quelconque des revendications 14 à 17, dans lequel le ou les émetteur(s) est/sont conçu(s) pour exposer le courant gazeux à un rayonnement oblique variable provenant d'une direction changeante et/ou simultanément de plusieurs directions.

19. Dispositif selon l'une quelconque des revendications 14 à 18, dans lequel les moyens (15) pour la détection d'une différence de fréquence comprennent des moyens de traitement de données pour l'évaluation d'un ou de plusieurs paramètre(s) (17) du rayonnement diffusé et/ou sont configurés pour la comparaison d'un ou de plusieurs paramètre(s) du rayonnement diffusé détecté (13) avec une ou plusieurs valeur(s) de seuil prédéterminée(s) et pour la constatation que le ou les paramètre (s) se situe(nt) respectivement à l'intérieur d'un intervalle de comparaison fixé par la ou les valeur(s) de seuil; et/ou pour la détermination d'une fréquence du rayonnement diffusé et/ou d'une fréquence d'un signal Doppler résultant du rayonnement émis et du rayonnement diffusé, et pour la détermination, à partir de la fréquence du rayonnement diffusé ou du signal Doppler, d'une vitesse relative des objets en mouvement dans la direction du rayonnement émis; et/ou pour la détermination d'une intensité de signal (17) du rayonnement diffusé et/ou d'une intensité de signal d'un signal Doppler résultant du rayonnement émis et du rayonnement diffusé, et pour la détermination, à partir de l'intensité de signal du rayonnement diffusé ou du signal Doppler, d'une grandeur caractéristique, qui correspond à une grandeur moyenne d'objets en mouvement et/ou à un nombre d'objets en mouvement par unité de volume dans le courant gazeux; et/ou pour la détermination d'une distance des objets en mouvement par rapport au récepteur (14); et/ou pour la détermination d'une vitesse d'écoulement du courant gazeux; et/ou pour la fusion du ou des paramètre(s) avec des données, qui sont fournies par un ou plusieurs capteur(s) externe(s), dans lequel le ou les capteur(s) externe(s) est/sont basé(s) sur d'autres principes de mesure que le radar Doppler.

20. Dispositif selon l'une quelconque des revendications 14 à 19, qui comprend en outre un filtre, qui est apte à discriminer un rayonnement né de la diffusion du rayonnement émis sur des objets immobiles (2).

21. Dispositif selon l'une quelconque des revendications 14 à 20, qui se présente sous la forme d'un refroidisseur à contact direct pour une installation de séparation de l'air ou d'une installation de séparation de l'air.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080295609 A1
- GB 2322987 A

- GB 2026276 A